# EUROPEAN PATENT SPECIFICATION

(11) **EP 1 236 395 B1**
(45) Date of publication and mention of the grant of the patent: **18.04.2007**
(21) Application number: 02250853.5
(22) Date of filing: 07.02.2002
(51) Int. Cl.: A01K 97/12

(54) **A device for outdoor use**
Gerät für Aussenaktivitäten
Appareil pour activités de plein air

(30) Priority: 15.02.2001 GB 0103760
(43) Date of publication of application: 04.09.2002
(73) Proprietor: Fox Design International Limited, Hainault, Essex 1G6 3UT (GB)
(72) Inventor: Fox, Clifford Royston, Hainault, Essex IG6 3UT (GB); Simpson, Nigel, Ventnor, Isle of Wight PO38 3BZ (GB)
(74) Representative: Crouch, David John

(56) References cited:
- US-A- 5 088 223

## Description

The present invention is directed to a fish-bite detector which is constructed to provide an indication of movement of a fishing line which is coupled to the detector, when the detector is in use, comprising manually operable switch means and an indicator capable of giving a plurality of different indications, respectively associated with different operating parameters of the device, respective control means which serve to adjust the values of those parameters, the switch means, the indicator, the control means and a buzzer being connected together and being so constructed as to enable successive operations of the switch means to successively address the different parameters in such a fashion that an indication of which parameter is being addressed for the time being is provided by an associated one of the different indications of the indicator, further operation of the switch means causing the control means to vary the value of that parameter.

US-A-5,088,223 discloses a sensing device for use with a fishing rod comprising a body and support means connected to the body and adapted to secure the sensing device to a fishing rod. Sensing means extend from the body and, in use, contact the fishing line of a fishing rod, the sensing means being mounted in such a way that any force exerted on the line is transferred to the sensing member and thus to the body, and electronic means positioned within the body and adapted to receive the force exerted on the sensing means, and transform that force into a visual and/or audio indication to show that a pull is being exerted on the fishing line.

Another previously proposed construction has respective different controls to enable various parameters of the detector, such as the volume of the sound emitted upon detection of line movement, the pitch of that sound, and the extent of movement of the line required to trigger the sound, to be varied. An LCD screen provides means to enable the user to program the settings for these parameters within the detector.

One shortcoming of such a previously proposed construction is the difficulty with which the images can be seen on the LCD screen especially when condensation is formed on the screen. If condensation forms on the screen interior, it is impossible to wipe it away.

The present invention seeks to obviate this disadvantage.

Accordingly, the present invention is directed to a fish-bite detector having a construction as set out in the opening paragraph of the present specification, in which the respective different parameters comprise two or more of the following:
(a) alarm buzzer volume,
(b) alarm buzzer pitch,
(c) the sensitivity of the device, being the amount of movement of a fishing line necessary to trigger an alarm signal.

Preferably, the indicator comprises diode means which can emit different respective colours of light for the different parameters.

It is possible for the indicator instead to comprise a sound emitting device which can emit different respective sounds for the different parameters, for example different spoken words.

The switch means may comprise a first switch to select the parameter which is addressed, and a second switch to change the value of that parameter.

Preferably, the second switch is a rocker switch connected so that operation of the rocker switch in a first direction increases the value of the parameter and operation of the switch in the other direction decreases the value of the parameter.

An example of a fish-bite detector made in accordance with the present invention is illustrated in the accompanying drawings, in which:
Figure 1 shows a front view of the detector;
Figure 2 shows a cross-sectional exploded view of parts of the detector shown in Figure 1;
Figure 3 shows a cross-sectional view of the same detail as is shown in Figure 2 with the parts in their proper positions;
Figure 4 shows a perspective view of one of the parts shown in Figure 2 from a first end;
Figure 5 shows a perspective view of the part shown in Figure 4 from the other end;
Figure 6 shows a perspective view of further parts of the device shown in Figure 1 with the housing thereof removed to reveal those parts;
Figure 7 shows electrical circuitry of the detector shown in Figure 1; and
Figure 8 shows a flow chart of the programme in accordance with which the circuitry shown in Figure 7 is programmed.

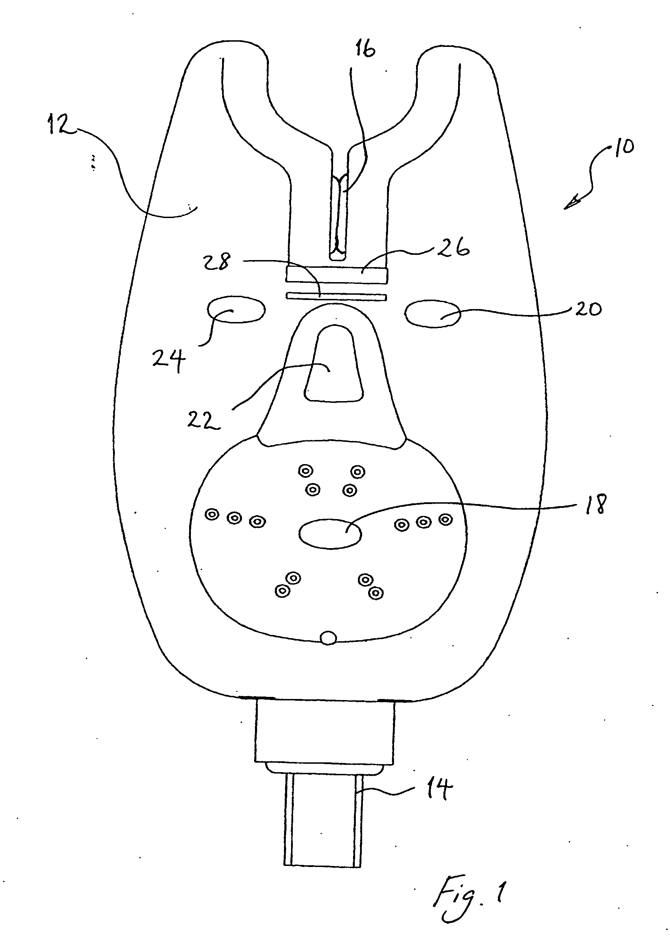

The fish-bite detector 10 shown in Figure 1 comprises a housing 12 provided at a lower end thereof with attachment means 14 to enable the detector to be attached to the top end of a bankstick. The detector 10 also has a wheel 16 towards its upper end for engagement with a fishing line (not shown).

The detector 10 is provided with a buzzer 18 having a diaphragm, an on/select/off switch 20, a rocker switch 22 and an LED and light guide assembly 24. The fish-bite detector 10 is further provided with a beta light slot 26 below the wheel 16, and a further LED and light guide assembly 28 below the beta light slot 26. In this example of the present invention, the visible end of the light guide 24 is oval and the visible end of the light guide of the assembly 28 is elongate, almost linear.

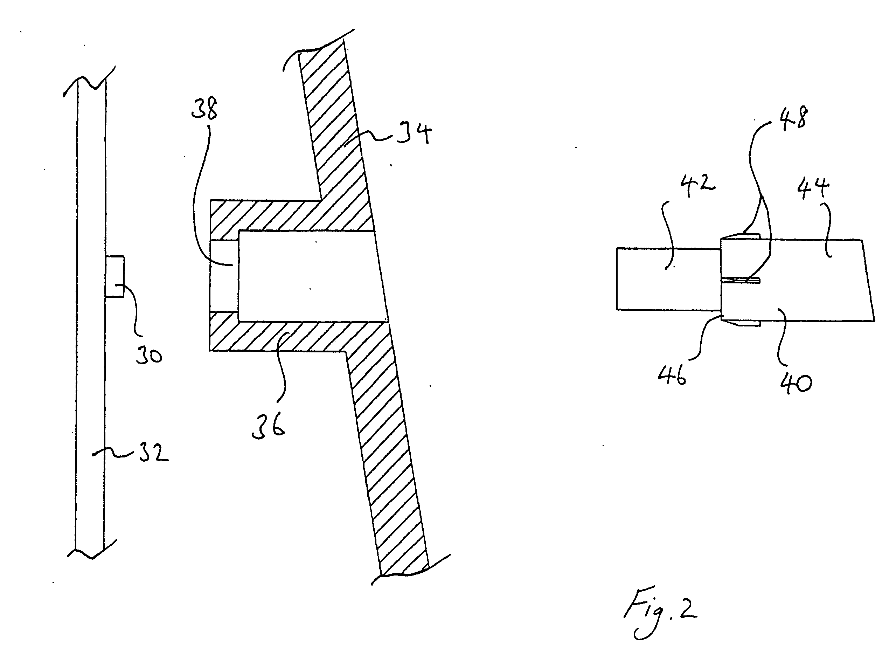

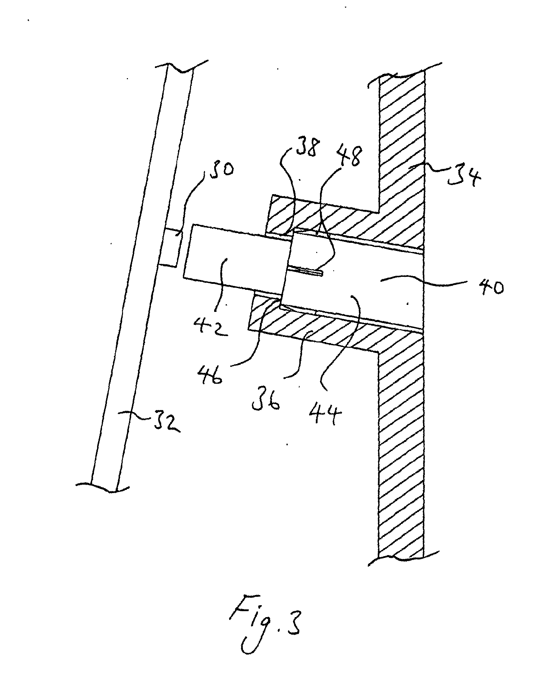

The LED and light guide assembly 24 is shown in greater detail in Figures 2 and 3. It comprises a triple-colour diode component 30 mounted on a printed circuit board 32. An adjacent portion 34 of the housing 12 is formed with a generally cylindrical recess 36 having an aperture 38 in its rearmost end. An acrylic light guide 40 has a first portion 42 and a second portion 44 of increased cross-section relative to the portion 42. The latter forms a close fit within the aperture 38 and extends therethrough so that its inner end is adjacent to the diode 30. The end of the portion 44 where it meets the portion 42, provides a shoulder 46 which abuts the interior end of the recess 36. Outwardly projecting knife-edge protuberances 48 are provided on the portion 44 adjacent to the shoulder 46 and engage the interior of the recess 36 when the light guide 40 is inserted into the recess 36. This form of construction for the light guide 40 and the manner in which it is held in the housing 12 is resistant to ingress of water into the housing interior.

The cross-sections of the portions 44 and 42, as well as the cross-section of the interior of the recess 36 and the aperture 38 are all generally oval in shape.

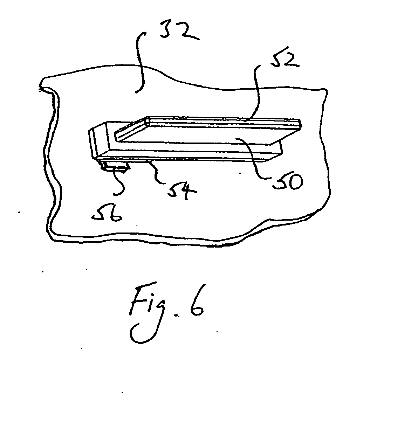

The LED and light guide assembly 28 is shown in greater detail in Figure 6. Thus, the assembly comprises a shaped light guide 50 having a very elongate, almost linear, front face 52, which is the face visible from outside the detector 10, and a rear face 54 which is more square in shape. The latter is adjacent to a multi-diode component 56 which is of a generally square shape and which is mounted on the printed circuit board 32.

The multi-diode component 56 comprises a red, blue and a green diode formed integrally within a single component. As a result, it is capable of emitting any colour of the rainbow by a suitable switching of these three diode parts. The intensity of light emitted by each diode part can be varied by changing the pulse width of an energising signal of high frequency.

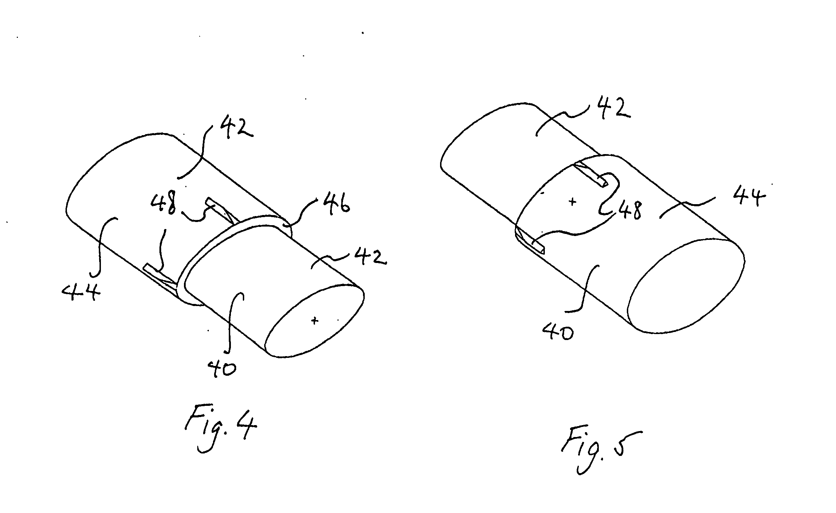

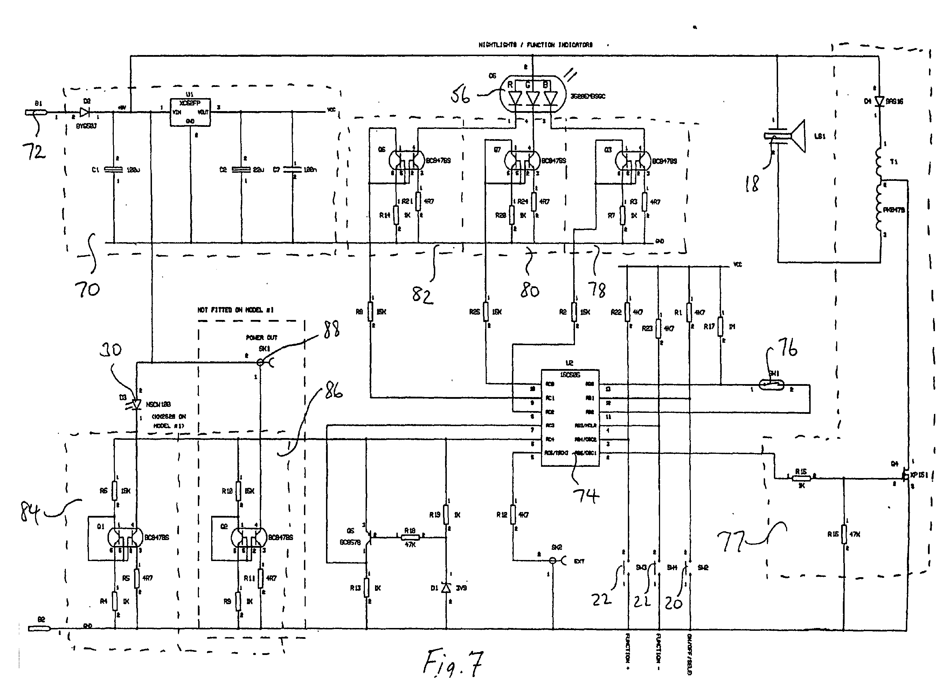

The electrical circuitry of the detector shown in Figure 1 is shown in detail in Figure 7. In this circuitry, parts shown therein which are already represented in one or more of the preceding Figures 1 to 6 have been given the same reference numerals as in those earlier Figures.

The circuitry provides a five volt regulator 70 connected to provide a five volt regulated output from a battery 72 to power a buzzer 18, the multi-diode component 56 and the LED 30. The manner in which these indicator devices are operated is controlled by a central processor 74. This is connected to receive signals from a reed switch 76 triggered by magnets (not shown) coupled to the wheel 16, the switch 20, and the first and second switching components of the rocker switch 22. The microprocessor 74 is also connected to respective drivers 77, 78, 80, 82, 84 and 86 for the buzzer 18, the respective blue, green and red components of the multi-diode component 56, the LED 30, and a power-out socket 88 to enable a remote indicator (not shown) connected to the detector 10 to provide a corresponding LED illumination to that of the detector 10.

The circuitry shown in Figure 7 operates in the following manner. With the device switched on by means of the switch 20 and the processor 74, a predetermined number of closures of the reed switch 76 set in accordance with the sensitivity setting of the device causes the buzzer 18 to emit signals at a pre-selected pitch and volume. The LED 30 is also caused to illuminate in sympathy with beeps on the buzzer 18.

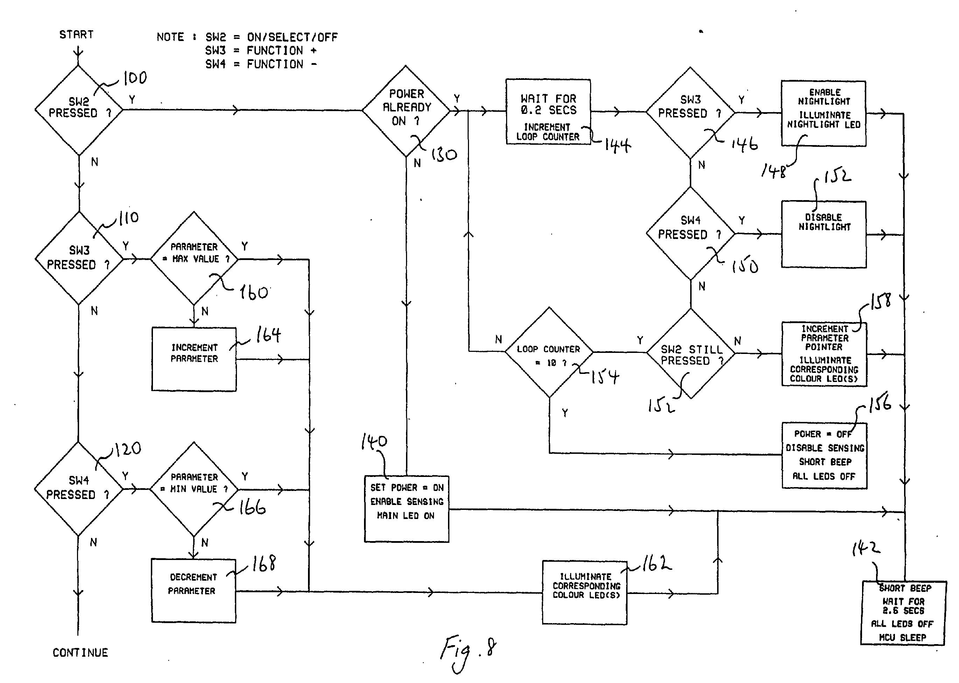

The sensitivity of the detector and the pitch and the volume of the buzzer 18 are all parameters of the detector 10 which can be selected using the switch 20 and the rocker switch 22 in the manner of the programme shown in Figure 8, in accordance with which the microprocessor 74 has been programmed.

The initiation of the programme shown in Figure 8 may be triggered by the pressing of the switch 20, the first component of the rocker switch 22 or the second component of the rocker switch 22 at steps 100, 110 and 120 of the programme. In the event that switch 20 is pressed, a check is made at step 130 in the programme that the power is already switched on. If that check reveals that there is no power, then the power is switched on at step 140 as is the LED 30. This step is registered by a short beep of the buzzer 18 at step 142, and an illumination of the LED 30 for about 2.5 seconds, thereafter all LEDs are shut-off and the microprocessor 74 is put into sleep mode.

In the event that power was already on at the time switch 20 was depressed as checked at step 130, after a pause of 0.2 seconds, a loop count is incremented at step 144, as stored in the microprocessor 74.

If at this stage the positive switch of the rocker switch 22 is pressed at step 146, then a nightlight is illuminated at step 148. This is achieved by a low illumination of all three diodes in the multiple diode 56. If, on the other hand, the minus component of the rocker switch 22 is pressed at this stage at step 150, the nightlight is switched off at step 152. If, on the other hand, at this stage the switch 20 is still pressed at step 152, then provided the loop counter has not already reached the value 10 as checked at step 154, the programme moves back to step 144. If at step 154 it is determined that the loop count has reached 10, then the microprocessor 74 causes a short beep to be emitted by the buzzer 18, the signals from the reed switch 76 to be disabled, all LEDs to be switched-off, and the power to be switched off at step 156. In the event at step 152 that the switch 20 is no longer pressed, a parameter pointer within the microprocessor 74 is incremented at step 158, and an associated respective colour is caused to be emitted by the multi-diode component 56.

The pointer determines which parameter, that is to say in this case, the volume of the buzzer 18, the pitch of the buzzer 18, and the sensitivity of the detector 10, is addressed by the microprocessor 74.

In the event that the positive component of the rocker switch 22 is pressed at step 110 (that is to say without the switch 20 being pressed), a check is first made whether the parameter for the time being addressed by the microprocessor 74 as last selected at step 158 has a maximum value. If it has, the programme passes to step 162 at which the multi-diode 56 is illuminated with the colour corresponding to the parameter currently being addressed by the microprocessor 74 whence the programme passes to step 142.

In the event that the parameter had not reached its maximum value at the check made at step 160, the parameter value is incremented at step 164 before the programme passes to step 162 and thence to step 142.

Similarly, if the negative component of the rocker switch 22 is pressed at step 120 whilst the switch 20 is not being pressed, a check is made at step 166 whether that parameter is already set at a minimum value. If it is, the programme proceeds to step 162 and 142 in that order. If it is not, the parameter value is decremented at step 168 before the programme passes on to steps 162 and 142.

Many variations to the illustrated detector are possible without taking it outside the scope of the present invention. To give one example only, the buzzer 18 could be used to indicate which parameter is being addressed at any time, by emitting respective different sounds for each parameter instead of the multi-diode component 56 which then becomes otiose.

## Claims

1. A fish-bite detector which is constructed to provide an indication of movement of a fishing line which is coupled to the detector when the detector is in use, the detector comprising manually operable switch means (20, 22) and an indicator (56) capable of giving a plurality of different indications, respectively associated with different operating parameters of the device, respective control means (74) which serve to adjust the values of those parameters, the switch means (20, 22), the indicator (56), the control means (74) and a buzzer (18) being connected together and being so constructed as to enable successive operations of the switch means (20 22) to successively address the different parameters in such a fashion that an indication of which parameter is being addressed for the time being is provided by an associated one of the different indications of the indicator (56), further operation of the switch means (20, 22) causing the control means (74) to vary the value of that parameter **characterised in that** the respective different parameters comprise two or more of the following:
(a) the volume of the alarm buzzer (18) of the device (10),
(b) the pitch of that alarm buzzer (18),
(c) the sensitivity of the device, being the amount of movement of a fishing line necessary to trigger operation of that alarm buzzer (18).

2. A fish-bite detector according to claim 1, **characterised in that** the indicator (56) comprises diode means which can emit different respective colours of light for the different parameters.

3. A fish-bite detector according to claim 1, **characterised in that** the indicator comprises a sound emitting device which can emit different respective sounds for the different parameters.

4. A fish-bite detector according to claim 3, **characterised in that** the indicator comprises a sound emitting device which can speak different respective words for the different parameters.

5. A fish-bite detector according to any preceding claim, **characterised in that** the switch means comprises a first switch (20) to select the parameter which is addressed, and a second switch (22) to change the value of that parameter.

6. A fish-bite detector according to claim 5, **characterised in that** the second switch (22) is a rocker switch connected so that operation of the rocker switch (22) in a first direction increases the value of the parameter and operation of the switch (22) in the other direction decreases the value of the parameter.

## Patentansprüche

1. Fischanbeißdetektor, der so konstruiert ist, dass er einen Hinweis auf eine Bewegung einer mit dem Detektor gekoppelten Angelschnur schafft, wobei der Detektor manuell betätigbare Schaltmittel (20, 22) und eine Hinweiseinrichtung (56), die mehrere verschiedene Hinweise geben kann, die verschiedenen Betriebsparametern der Vorrichtung zugeordnet sind, und jeweilige Steuermittel (74), die dazu dienen, die Werte jener Parameter einzustellen, umfasst, wobei die Schaltmittel (20, 22), die Hinweiseinrichtung (56), die Steuermittel (74) und ein Summer (18) miteinander verbunden und so konstruiert sind, dass sie aufeinander folgende Operationen des Schaltmittels (20, 22) ermöglichen, um nacheinander die verschiedenen Parameter in der Weise zu adressieren, dass ein Hinweis darauf, welcher Parameter momentan adressiert wird, durch einen zugeordneten der verschiedenen Hinweise der Hinweiseinrichtung (56) geschaffen wird, wobei eine weitere Operation der Schaltmittel (20, 22) die Steuermittel (74) dazu veranlasst, den Wert jenes Parameters zu ändern, **dadurch gekennzeichnet, dass** die jeweiligen verschiedenen Parameter zwei oder mehr der folgenden Parameter umfassen:
(a) die Lautstärke des Warnsummers (18) der Vorrichtung (10),
(b) die Tonhöhe des Warnsummers (18),
(c) die Empfindlichkeit der Vorrichtung, die ein Grad der Bewegung einer Angelschnur ist, der für die Auslöseoperation jenes Warnsummers (18) notwendig ist.

2. Fischanbeißdetektor nach Anspruch 1, **dadurch gekennzeichnet, dass** die Hinweiseinrichtung (56) Diodenmittel umfasst, die für die verschiedenen Parameter Licht mit jeweils unterschiedlicher Farbe aussenden können.

3. Fischanbeißdetektor nach Anspruch 1, **dadurch gekennzeichnet, dass** die Hinweiseinrichtung eine Schallaussendevorrichtung umfasst, die für die verschiedenen Parameter jeweils verschiedene Klänge aussenden kann.

4. Fischanbeißdetektor nach Anspruch 3, **dadurch gekennzeichnet, dass** die Hinweiseinrichtung eine Schallaussendevorrichtung umfasst, die für die verschiedenen Parameter jeweils verschiedene Wörter sprechen kann.

5. Fischanbeißdetektor nach einem vorhergehenden Anspruch, **dadurch gekennzeichnet, dass** die Schaltmittel einen ersten Schalter (20) zum Auswählen des Parameters, der adressiert wird, und einen zweiten Schalter (22) zum Ändern des Wertes dieses Parameters umfassen.

6. Fischanbeißdetektor nach Anspruch 5, **dadurch gekennzeichnet, dass** der zweite Schalter (22) ein Kippschalter ist, der so angeschlossen ist, dass die Betätigung des Kippschalters (22) in einer ersten Richtung den Wert des Parameters erhöht und die Betätigung des Schalters (22) in der anderen Richtung den Wert des Parameters erniedrigt.

## Revendications

1. Un détecteur de touches de pêche, construit pour fournir une indication du déplacement d'une ligne de pêche, couplée au détecteur, lorsque le détecteur est en utilisation, le détecteur comprenant des moyens de commutation (20, 22), actionnables manuellement, et un indicateur (56), capable de fournir une pluralité d'indications différentes, respectivement associées à des paramètres de fonctionnement différents du dispositif, des moyens de commande (74) respectifs servant à ajuster les valeurs de ces paramètres, les moyens de commutation (20, 22), l'indicateur (56), les moyens de commande (74) et un vibreur (18) étant reliés ensemble et étant construits d'une manière à permettre des opérations successives de la part des moyens de commutation (20, 22), afin de traiter successivement les différents paramètres, de telle manière qu'une indication du paramètre, qui est traitée pour cette période de temps, soit fournie par une indication associée des différentes indications de l'indicateur (56), un actionnement ultérieur des moyens de commutation (20, 22) provoquant la variation, par les moyens de commande (74), de la valeur de ce paramètre, **caractérisé en ce que** les différents paramètres respectifs comprennent deux ou plusieurs des paramètres suivants :
(a) le volume sonore du vibreur d'alarme (18) du dispositif (10),
(b) la hauteur du son du vibreur d'alarme (18),
(c) la sensibilité du dispositif, étant la quantité de déplacement d'une ligne de pêche nécessaire pour déclencher le fonctionnement de ce vibreur d'alarme (18).

2. Un détecteur de touches de pêche selon la revendication 1, **caractérisé en ce que** l'indicateur (56) comprend des moyens de diode pouvant émettre des couleurs respectives différentes de lumière pour les différents paramètres.

3. Un détecteur de touches de pêche selon la revendication 1, **caractérisé en ce que** l'indicateur comprend un dispositif émetteur de sons, qui peut émettre différents sons respectifs pour les différents paramètres.

4. Un détecteur de touches de pêche selon la revendication 3, **caractérisé en ce que** l'indicateur comprend un dispositif émetteur de sons, pouvant prononcer différents mots respectifs pour les différents paramètres.

5. Un détecteur de touches de pêche selon l'une quelconque des revendications précédentes, **caractérisé en ce que** les moyens de commutation comprennent un premier interrupteur (20) pour sélectionner le paramètre qui est traité, et un deuxième interrupteur (22) pour modifier la valeur de ce paramètre.

6. Un détecteur de touches de pêche selon la revendication 5, **caractérisé en ce que** le deuxième commutateur (22) est un commutateur à bascule, connecté de manière que le fonctionnement du commutateur à bascule (22) dans un premier sens ait comme effet d'augmenter la valeur du paramètre, et que le fonctionnement du commutateur (22) dans l'autre sens ait comme effet de diminuer la valeur du paramètre.
